# EUROPEAN PATENT APPLICATION

(11) **EP 4 432 083 A1**
(43) Date of publication of application: **18.09.2024**
(21) Application number: 22903565.4
(22) Date of filing: 08.12.2022
(51) Int. Cl.: G06F 9/48, G06F 9/38

(54) **ATOMICITY MAINTAINING METHOD, PROCESSOR AND ELECTRONIC DEVICE**

(30) Priority: 10.12.2021 CN 202111507703
(71) Applicant: Loongson Technology Corporation Limited, Beijing 100095 (CN)
(72) Inventor: WANG, Wenxiang, Beijing 100095 (CN)
(74) Representative: Bandpay & Greuter
(86) International application number: PCT/CN2022/137510
(87) International publication number: WO 2023/104146

(57) **Abstract**

The present application provides an atomicity retaining method and a processor, and an electronic device. The method includes: generating N load/store operations from a vector load/store instruction, where N is a positive integer greater than or equal to 1; detecting whether there is an event during processing of the N load/store operations that renders the vector load/store instruction non-atomic; processing the N load/store operations; in a case that there is the event that renders the vector load/store instruction non-atomic, having none of the processing of the N load/store operations produce any processing effect, or having the N load/store operations all produce processing effects. The present application can realize retaining the atomicity of vector instructions.

## Description

The present application claims priority to Chinese Patent Application No. 202111507703.X, entitled "ATOMICITY RETAINING METHOD AND PROCESSOR, AND ELECTRONIC DEVICE" and filed with the China National Intellectual Property Administration on December 10, 2021, which is hereby incorporated by reference in its entirety.

### TECHNICAL FIELD

The present application relates to the field of computer technologies and, in particular, to an atomicity retaining method and a processor, and an electronic device.

### BACKGROUND

The atomicity of an instruction refers to the characteristic that an execution process of an instruction will not be interrupted from the beginning to the end of execution. For example, the execution of an exemplary atomic instruction A, once started, not to be suspended because of events such as interrupts or exceptions, until the execution of instruction A is completed.

During the execution of an instruction, however, the execution of an instruction would be suspended because of events such as interrupts or exceptions. For example, the execution of an exemplary non-atomic instruction *B* may be suspended by CPU upon CPU's detection of an interrupt, which is of a higher priority to be executed first. The CPU continues executing instruction *B* after the interrupt is handled. Due to the interrupts or exceptions, the atomicity of the instruction cannot be retained.

In the processing of any vector instruction in the prior art, a single vector instruction involves a plurality of identical or similar operations within the processor. However, from the perspective of a software developer, a single vector instruction is the smallest operating unit of a CPU, that is, a single vector instruction should be atomic. Therefore, a processor design must ensure the atomicity of vector instruction executions.

In practical applications, a plurality of operations split from one vector instruction by the processor are executed concurrently. However, the concurrent execution mechanism designed to improve the efficiency of instruction execution brings challenges to retaining the atomicity of the vector instruction. In addition, an instruction system further includes a barrier instruction, which is used to separate load/store operations before and after the barrier instruction. Within a processor, the barrier instruction and a plurality of operations obtained by splitting an other vector instruction are also processed concurrently. The above factors pose further difficulties in ensuring the atomicity of the vector instruction.

### SUMMARY

The present application provides an atomicity retaining method and a processor, and an electronic device, to solve the problem in the prior art that after a vector instruction is split, the atomicity of the vector instruction cannot be guaranteed because of the multi-operation parallel execution mechanism as well as the parallel execution mechanism of a barrier instruction and the vector instruction.

In order to solve the problem mentioned above, the present application discloses an atomicity retaining method, and the method includes:
splitting a vector load/store instruction into N load/store operations, where N is a positive integer greater than or equal to 1;
detecting whether there is an event during processing of the N load/store operations that renders the vector load/store instruction non-atomic;
in a case that there is the event that renders the vector load/store instruction non-atomic, having none of the N load/store operations produce any processing effect, or having the N load/store operations all produce processing effects.

In order to solve the problem mentioned above, the present application further discloses a processor, which includes:
a decoding unit, configured to obtain a vector load/store instruction, and generate N load/store operations from the vector load/store instruction, wherein N is a positive integer greater than or equal to 1 from the vector load/store instruction;
a processing unit, configured to: detect whether there is an event during processing of the N load/store operations that renders the vector load/store instruction non-atomic; and in a case that there is the event that renders the vector load/store instruction non-atomic, have none of the N load/store operations produce any processing effect, or have the N load/store operations all produce processing effects.

In order to solve the problem mentioned above, the present application still discloses an electronic device, which includes a memory and one or more programs, where one or more programs are stored in the memory and configured to cause one or more processor to process the one or more atomicity retaining methods of the present application.

Compared with the prior art, the present application includes the following advantages:
according to the atomicity retaining method and the processor, and the electronic device provided by embodiments of the present application, through generating the N load/store operations from the vector load/store instruction, detecting whether there is an event during the processing of the N load/store operations that renders the vector load/store instruction non-atomic, and in a case that there is the event during the processing of the N load/store operations that renders the vector load/store instruction non-atomic, having none of the processing of the N load/store operations produce any processing effect, or having the N load/store operations all produce processing effects, the atomicity retaining of vector instructions can be realized.

### BRIEF DESCRIPTION OF DRAWINGS

FIG. 1 is a flowchart of steps of an atomicity retaining method according to Embodiment 1 of the present application.
FIG. 2 is a flowchart of steps of an atomicity retaining method according to Embodiment 2 of the present application.
FIG. 3 is a flowchart of steps of an atomicity retaining method according to Embodiment 3 of the present application.
FIG. 4 is a flowchart of steps of an atomicity retaining method according to Embodiment 4 of the present application.
FIG. 5 is a flowchart of steps of an atomicity retaining method according to Embodiment 5 of the present application.
FIG. 6-A is a structural block diagram of a processor according to Embodiment 5 of the present application.
FIG. 6-B is a structural block diagram of another processor according to Embodiment 5 of the present application.
FIG. 7 is a structural block diagram of an electronic device according to Embodiment 6 of the present application.

### DESCRIPTION OF EMBODIMENTS

In order to make the above-mentioned purposes, features, and advantages of the present application more obvious and understandable, the present application will be described in further detail below in conjunction with the accompanying drawings and the description of embodiments.

### Embodiment 1

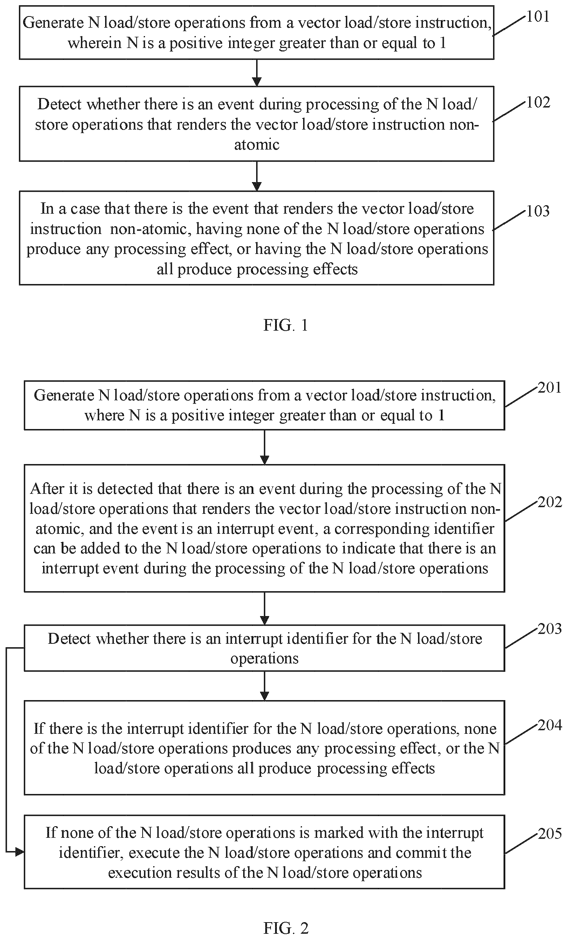

Referring to FIG. 1, a flowchart of steps of an atomicity retaining method according to Embodiment 1 of the present application is shown.

The atomicity retaining method provided by the embodiment of the present application may be executed on a Central Processing Unit (CPU), and includes the steps as follows.

Step 101, generate N load/store operations from a vector load/store instruction, where N is a positive integer greater than or equal to 1.

The embodiment of the present application can be applied to a scenario where instruction atomicity is achieved through detecting an event during the processing of the vector load/store operation instruction that renders the vector load/store instruction non-atomic, and determining, according to a result of the detecting, whether to execute the vector load/store instruction or whether to commit an executing result of the vector load/store instruction.

By the vector load/store instruction, the same processing can be implemented on a set of data at the same time. In practical applications, after the vector load/store instruction is received, the vector load/store instruction can be decoded, to be split into the N load/store operations, where N is a positive integer greater than or equal to 1.

In this example, the vector load/store instruction can be a Load instruction or a Store instruction.

After the N load/store operations are generated from the vector load/store instruction, step 102 is executed.

Step 102, detect whether there is an event during processing of the N load/store operations that renders the vector load/store instruction non-atomic.

In the prior art, a pipeline for vector load/store instruction processing may include: 1. instruction fetching and decoding, that is, obtaining the vector load/store instruction and decoding the vector load/store instruction; 2. issuing, that is, delivering an instruction of an operation queue to a reservation station according to an operation type, and reading a value and a result status field of a register during the issuing process; 3. executing, executing if all required operands are ready; 4. writing back, transferring an execution result to a result bus and releasing the reservation station; 5. committing, that is, writing the execution result of the instruction back to the register or a memory when the execution result of the instruction in the queue has been written back and no anomaly occurs.

Based on this, in the embodiment of the present application, performing processing on the vector load/store instruction refers to performing any one operation of or a combination of multiple operations of instruction-fetching, decoding, issuing, executing, writing back, and committing on the vector load/store instruction. Performing processing on the load/store operation includes any one operation of or a combination of multiple operations of issuing, executing, and committing performed on the load/store operation.

The event mentioned in this example refers to an event that renders the vector load/store instruction non-atomic. In this example, the event may include at least one of the events such as an interrupt event, an exception event, an event that a barrier instruction is detected, and so on.

The interrupt event (also called external interrupt) refers to an event from outside a CPU executing instruction.

The exception event refers to an event from within the CPU executing instruction.

The barrier instruction refers to an instruction used to ensure synchronization between different operations; for example, the barrier instruction can be used to complete a synchronization function between load/store load/store operations and indicate synchronization objects and synchronization degree of the load/store load/store operations.

The atomicity of the vector load/store instruction refers to the characteristic that execution of a vector load/store instruction will not be interrupted from the beginning to the end of execution and until the committing is completed.

Therefore, in this example, after the vector load/store instruction is split into the N load/store operations, the N load/store operations can be examined during the processing of the N load/store operations, that is, to detect whether there is an event during the processing of the N load/store operations that renders the vector load/store instruction non-atomic. Optionally, when performing the processing on the load/store operation includes performing any one operation of or a combination of multiple operations of issuing, executing, and issuing on the load/store operation, detecting the event that renders the vector load/store instruction non-atomic for the N load/store operations is to: examine the N load/store operations during the process of issuing the N load/store operations; examine the N load/store operations during the process of executing the N load/store operations; or examine the N load/store operations during the process of committing the N load/store operations. The specific stage at which the N load/store operations are examined depends on the type of the event (i.e., the interrupt event, exception event, the barrier instruction, and the like) that renders the vector load/store instruction non-atomic.

After whether there is an event during the processing of the N load/store operations that renders the vector load/store instruction non-atomic is detected, step 103 is executed.

Step 103, in a case that there is the event that renders the vector load/store instruction non-atomic, none of the N load/store operations produces any processing effect, or the N load/store operations all produce processing effects.

In the embodiment of the present application, a load/store operation does not produce a processing effect, which means that the load/store operation is executed but not committed, or the load/store operation is not executed, or the load/store operation is not issued; the load/store operations all produce processing effects, which means that all the N load/store operations into which the vector load/store instruction is split are executed, and all execution results of the N load/store operations are committed.

In the embodiment of the present application, if there is no event that renders the vector load/store instruction non-atomic, the N load/store operations can be executed in accordance with the above-mentioned instruction processing pipeline sequence, and the execution results of the N load/store operations can be committed. Specifically, when the vector load/store instruction is the Load instruction, the operation of reading operand at an address indicated by the vector load/store instruction from a memory to a designated general-purpose register can be performed. When the vector load/store instruction is the Store instruction, the operation of writing the operand at the address indicated by the vector load/store instruction from the designated general-purpose register to the memory can be performed.

In the embodiment of the present application, when it is detected that there is an event during the processing of the N load/store operations that renders the vector load/store instruction non-atomic, the vector load/store instruction may not be processed, that is, this processing of the vector load/store instruction may be abandoned, or the vector load/store instruction can also be executed, but the execution result of the vector load/store instruction is not committed. Specifically, first, when it is detected that there is an interrupt identifier marked on the N load/store operations, it means that there is an interrupt event during the processing of the N load/store operations. At that point, this execution of the vector load/store instruction is abandoned, that is, all of the N load/store operations are not executed, or the N load/store operations are not issued. Second, when there is an exception event during the processing of the N load/store operations, the vector load/store instruction is executed, but the execution result is not committed. Third, for the barrier instruction, the barrier instruction can be executed first, with all the load/store operations being not executed or not issued; then after the processing of the barrier instruction is completed, the load/store operations are executed and the execution result are committed. This process will be described in detail from three dimensions of the interrupt event, exception event, and barrier instruction respectively in combination with Embodiment 2, Embodiment 3, and Embodiment 4, and will not be described in detail here in this embodiment.

In addition, in the embodiment of the present application, in a case that it is detected that there is an event during the processing of the N load/store operations that renders the vector load/store instruction non-atomic, the vector load/store instruction can be executed entirely and the execution result of the vector load/store instruction can be committed, and then the event that renders the vector load/store instruction non-atomic is processed. Specifically, first, when it is detected that there is an interrupt identifier marked on the N load/store operations, it means that there is an interrupt event during the processing of the N load/store operations. At that point, after the N load/store operations are issued and executed, the execution results of the N load/store operations are committed, and the interrupt event is responded to after all the execution results have been committed. Second, for the barrier instruction, all the load/store operations can be issued and executed first, and after the execution results of all the load/store operations are committed, the barrier instruction is processed. Since the exception event is an event from within the instruction to be processed, committing of all the execution effects of the instruction is impossible once the exception event is encountered during instruction processing. This process will be described in detail from two dimensions of the interrupt event and barrier instruction respectively in combination with Embodiment 2, Embodiment 3, and Embodiment 4, and will not be described in detail here in this embodiment.

According to the atomicity retaining method provided by the embodiment of the present application, the N load/store operations are generated from the vector load/store instruction, whether there is an event during the processing of the N load/store operations that renders the vector load/store instruction non-atomic is detected, and in a case that there is an event that renders the vector load/store instruction non-atomic, none of the processing of the N load/store operations produces any processing effect, or the N load/store operations all produce processing effects, thereby the atomicity retaining of the vector instruction can be realized. With the technical solution, for in the prior art the parallel execution mechanism of the vector instruction, or the concurrent execution mechanism of the barrier instruction and multiple operations obtained by splitting the other vector instruction, by executing none of the load/store operations, committing none of the execution results of the load/store operations or committing all the execution results of the load/store operations when encountering an event that renders the vector load/store instruction non-atomic, a situation can be avoided where in a vector load/store instruction, a portion of the load/store operations obtained by splitting the vector load/store instruction has already produced an execution effect while another portion of the load/store operations does not produce an execution effect, thereby effectively ensuring the atomicity of the vector instruction.

### Embodiment 2

Referring to FIG. 2, a flowchart of steps of an atomicity retaining method according to Embodiment 2 of the present application is shown.

An executive entity of the atomicity retaining method provided by the embodiment of the present application may be a CPU, and the event that renders the vector load/store instruction non-atomic is an interrupt event. Based on this, the atomicity retaining method includes the steps as follows.

Step 201, generate N load/store operations from a vector load/store instruction, where N is a positive integer greater than or equal to 1.

In the embodiment of the present application, by the vector load/store instruction, the same processing can be implemented on a set of data at the same time. In practical applications, after the vector load/store instruction is received, splitting can be performed on the vector load/store instruction, to split the vector load/store instruction into N load/store operations, where N is a positive integer greater than or equal to 1.

In this example, the vector load/store instruction can be a Load instruction or a Store instruction.

After the N load/store operations are generated from the vector load/store instruction, step 202 is executed.

Step 202, after it is detected that there is an event during the processing of the N load/store operations that renders the vector load/store instruction non-atomic, and the event is an interrupt event, a corresponding identifier can be added to the N load/store operations to indicate that there is an interrupt event during the processing of the N load/store operations.

In the embodiment of the present application, the step of detecting whether there is an interrupt event during the processing of the N load/store operations can be performed during the issuing phase of the N load/store operations, or during the execution phase of the N load/store operations.

In a specific implementation of the present application, an interrupt marking manner may include:
step A1, during the processing of the vector load/store instruction, in response to an occurrence of an interrupt, add an interrupt identifier to one or more of the N load/store operations.

In actual applications, the number of vector load/store instructions is huge. After a vector load/store instruction is obtained, the vector load/store instruction is added to a cache and wait to be issued for execution. During the processing of a vector load/store instruction, a detection of the interrupt event can be performed on the vector load/store instruction, to detect whether there is an interrupt event during the processing of the vector load/store instruction that renders the vector load/store instruction non-atomic. In a specific implementation, as the interrupt event is an external event, the CPU can detect in real-time whether an interrupt request is received during the processing of a vector load/store instruction, in order to determine whether there is an interrupt event during the processing of the vector load/store instruction according to a detecting result, that is, when the CPU receives the interrupt request, it is determined that the detecting result is that there is an interrupt event during the processing of the vector load/store instruction.

Of course, other manners can also be used to detect whether there is an interrupt event during the processing of the vector load/store instruction that renders the vector load/store instruction non-atomic. Specifically, the detecting manner of the interrupt event can be determined according to service demands, and will not be limited in this embodiment.

In the embodiment of the present application, the interrupt identifier can be used to indicate that there is an identifier of the interrupt event during the processing of the N load/store operations. Specifically, the manifestation of the interrupt identifier can be determined according to service demands, and will not be limited in this embodiment.

Further, if it is detected that there is an event during the processing of the N load/store operations that renders the vector load/store instruction non-atomic, and the event is the interrupt event, the interrupt identifier can be added to the load/store operations.

In a specific implementation, adding the interrupt identifier to the load/store operations can be divided into the two situations as follows.
1. add the interrupt identifier to any one of the N load/store operations. Specifically, the interrupt identifier can be added to the foremost load/store operation, the last load/store operation, or any one load/store operation between the foremost and the last load/store operations (it can be understood that "the foremost" and "the last" described here are defined according to the execution order of the N load/store operations). For example, a vector load/store instruction may be split into five load/store operations, which are sorted in accordance with the execution order of the five load/store operations from foremost to last in the following: load/store operation 1, load/store operation 2, load/store operation 3, load/store operation 4 and load/store operation 5. For adding the interrupt identifier, the interrupt identifier can be added to the foremost load/store operation (i.e., load/store operation 1), the last load/store operation (load/store operation 5), or the load/store operation between the foremost and the last load/store operations (i.e., load/store operation 2, load/store operation 3, or load/store operation 4).

Preferably, the interrupt identifier is added to the foremost load/store operation of the N load/store operations.

It can be understood that the above-mentioned examples are only examples made to better understand the technical solutions of the embodiments of the present application, and are not intended to be the sole limitation to this embodiment.

2. add the interrupt identifier to all of the N load/store operations, that is, add the interrupt identifier to each of the N load/store operations. For example, following the example mentioned above, after the vector load/store instruction is split into 5 load/store operations, the interrupt identifier can be added to all of these 5 load/store operations, that is, the interrupt identifier is added to load/store operation 1, load/store operation 2, load/store operation 3, load/store operation 4, and load/store operation 5.

In the embodiment of the present application, by adding the interrupt identifier for indicating the interrupt event to the N load/store operations, whether a vector load/store instruction is atomic can be straightly leamt by the interrupt identifier during the subsequent processing of the vector load/store instruction, to determine how to process the vector load/store instruction.

Step 203, detect whether there is an interrupt identifier for the N load/store operations.

In the embodiment of the present application, after the interrupt identifier is added to the N load/store operations in the manner mentioned above, it is possible to examine the N load/store operations in turn to detect whether the N load/store operations are marked with interrupt identifiers in order to determine whether there is an interrupt event during the processing of the N load/store operations.

After the interrupt identifier is added to the N load/store operations, the interrupt identifier can be detected in two manners.

First, examine the N load/store operations in turn to detect whether the N load/store operations are marked with interrupt identifiers.

Second, detect whether the foremost load/store operation of the N load/store operations is marked with the interrupt identifier.

After it is detected that there is an interrupt identifier for the N load/store operations, step 204 is executed.

After it is detected that none of the N load/store operations is marked with the interrupt identifier, step 205 is executed.

Step 204, if there is the interrupt identifier for the N load/store operations, none of the N load/store operations produces any processing effect, or the N load/store operations all produce processing effects.

After it is detected that N load/store operations are marked with interrupt identifiers, none of the N load/store operations produces any processing effect, or the N load/store operations all produce processing effects, specifically, which can be described in combination with the following four cases.

In the first case, if it is detected that any one of the N load/store operations is marked with the interrupt identifier, none of the N load/store operations is issued or executed. At that point, none of the N load/store operations produces any execution or processing effect, that is, after the responding to the interrupt event is completed, issuing or execution of the N load/store operations continues, and the execution results of the N load/store operations are then committed.

Optionally, if it is detected during the issuing phase of the N load/store operations that any one of the N load/store operations is marked with the interrupt identifier, none of the N load/store operations is issued, or the N load/store operations are issued but none of the N load/store operations is executed; if it is detected during the execution phase of the N load/store operations that any one of the N load/store operations is marked with an interrupt identifier, none of the execution results of the N load/store operations is committed.

In the second case, if it is detected that any one of the N load/store operations is marked with the interrupt identifier, each of all the N load/store operations is committed and executed, and all the execution results of the N load/store operation are committed, that is, the interrupt event is responded to after the execution of all the N load/store operations is completed and corresponding execution results are committed.

In the third case, if it is detected that the foremost load/store operation of the N load/store operations is marked with the interrupt identifier, none of the N load/store operations is issued or executed. At that point, none of the N load/store operations produces any processing effect, that is, after the responding to the interrupt event is completed, issuing or execution of the N load/store operations continues, and the execution results of the N load/store operations are then committed.

Optionally, if it is detected during the issuing phase of the N load/store operations that the foremost load/store operation of the N load/store operations is marked with the interrupt identifier, none of the N load/store operations is issued, or the N load/store operations are issued but none of the N load/store operations is executed; if it is detected during the execution phase of the N load/store operations that the foremost load/store operation of the N load/store operations is marked with the interrupt identifier, none of the execution results of the N load/store operations is committed.

In the fourth case, if it is detected that the foremost load/store operation of the N load/store operations is marked with the interrupt identifier, all the N load/store operations can be executed, and the execution results of the N load/store operations can be committed, that is, the interrupt event is responded to after the execution of all the N load/store operations is completed and corresponding execution results are committed.

Step 205, if none of the N load/store operations is marked with the interrupt identifier, execute the N load/store operations and commit the execution results of the N load/store operations.

If it is detected that none of the N load/store operations is marked with the interrupt identifier, the N load/store operations can be executed to obtain the execution results of the N load/store operations, and then the execution results of the N load/store operations can be committed.

According to the atomicity retaining method provided by the embodiments of the present application, the N load/store operations are generated from the vector load/store instruction, whether the N load/store operations are marked with interrupt identifiers is detected, and when the interrupt identifier is detected, none of the processing of the N load/store operations produces any processing effect, or the N load/store operations all produce processing effects. With the technical solution of the present application, during the processing of a vector load/store operation, once an interrupt event occurs, it can be ensured that the processing of the vector load/store instruction is completed entirely before the interrupt event is responded to, or the vector load/store instruction is processed after the responding to the interrupt event is completed, so that the following situation does not occur due to the interrupt event: the execution result of partial load/store operations of the vector load/store instruction is committed, and thus the atomicity retaining of vector instructions can be achieved.

### Embodiment 3

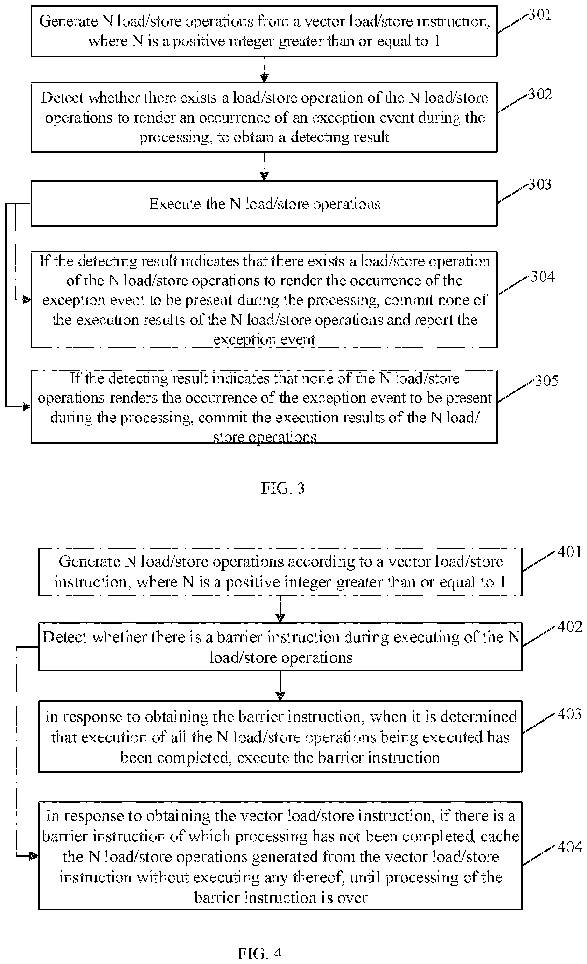

Referring to FIG. 3, a flowchart of steps of an atomicity retaining method according to Embodiment 3 of the present application is shown.

An executive entity of the atomicity retaining method provided by the embodiment of the present application may be a CPU, and the event that renders the vector load/store instruction non-atomic is an exception event. Based on this, the atomicity retaining method includes the steps as follows.

Step 301, generate N load/store operations from a vector load/store instruction, where N is a positive integer greater than or equal to 1.

In the embodiment of the present application, by the vector load/store instruction, the same processing can be implemented on a set of data at the same time. In practical applications, after the vector load/store instruction is received, splitting can be performed on the vector load/store instruction, to split the vector load/store instruction into N load/store operations, where N is a positive integer greater than or equal to 1.

In this example, the vector load/store instruction can be a Load instruction or a Store instruction.

After the N load/store operations are generated from the vector load/store instruction, step 302 is executed.

Step 302, detect whether there exists a load/store operation of the N load/store operations to render an occurrence of an exception event during the processing, to obtain a detecting result.

After the N load/store operations are generated from the vector load/store instruction, whether there exists a load/store operation of the N load/store operations to render an occurrence of an exception event to be present during the processing can be detected, to obtain the detecting result. The detecting process for the exception event can be described in detail in conjunction with the following specific implementations.

In the embodiment of the present application, the step of detecting whether there is an exception event during the processing of the N load/store operations can be performed in the execution phase of the N load/store operations.

In a specific implementation of the present application, step 302 can include:
sub-step S 1, obtain a load/store address of each of the N load/store operations.

In the embodiment of the present application, after the N load/store operations are generated from the vector load/store instruction, the load/store address of each of the N load/store operations can be obtained.

After the load/store address of each of the N load/store operations is obtained, sub-step S2 can be executed.

Sub-step S2, for each load/store address, detect whether there is a condition satisfying a trigger of the exception event; if there is the condition satisfying the trigger of the exception event, determine the detecting result to be that there exists a load/store operation of the N load/store operations to render the occurrence of the exception event during the processing; if there is no condition satisfying the trigger of the exception event, determine the detecting result to be that there exists none of the N load/store operations to render the occurrence of the exception event during the processing.

After the load/store address of each of the N load/store operations is obtained, whether there is a condition satisfying a trigger of the exception event can be detected for each load/store address; if there is a condition satisfying the trigger of the exception event, determine the detecting result to be that there is any one of the N load/store operations that results in the exception event to be present during the processing; if there is no condition satisfying the trigger of the exception event, determine the detecting result to be that there is none of the N load/store operations that results in the exception event to be present during the processing.

The condition satisfying the trigger of the exception event includes at least one of the following conditions:
1. there is an attribute permission illegality in a permission for any one of the load/store operations; the attribute permission illegality includes a segment attribute permission illegality and a page attribute permission illegality, and the attribute permission mainly refers to read permission, write permission, execute permission, privilege level permission, and so on; the attribute permission illegality is mainly used to represent whether an action of any one load/store operation/vector load/store instruction is consistent with permission corresponding to an address accessed by said any one load/store operation/vector load/store instruction, and if the action of said any one load/store operation/vector load/store instruction is not consistent with the permission corresponding to the address accessed by said any one load/store operation/vector load/store instruction, it is determined that there is an attribute permission illegality in the permission of said any one load/store operation/vector load/store instruction.
2. a load/store address is not in an address translation table;
3. a load/store address of the vector load/store instruction is out-of-bounds.

Step 303, execute the N load/store operations.

After the N load/store operations are generated from the vector load/store instruction, the N load/store operations can be executed to obtain execution results of the N load/store operations.

Step 304, if the detecting result indicates that there exists a load/store operation of the N load/store operations to render the occurrence of the exception event to be present during the processing, commit none of the execution results of the N load/store operations and report the exception event.

When the detecting result of the exception event indicates that there is a load/store operation of the N load/store operations that results in the exception event to be present during the processing, none of the execution results of the N load/store operations is committed and the exception event is reported.

Step 305, if the detecting result indicates that none of the N load/store operations renders the occurrence of the exception event to be present during the processing, commit the execution results of the N load/store operations.

When the detecting result of the exception event indicates that none of the N load/store operations results in the exception event to be present during the processing, the execution results of the N load/store operations can be committed.

According to the atomicity retaining method provided by the embodiment of the present application, the N load/store operations are generated from the vector load/store instruction, whether there is any one of the N load/store operations that results in the exception event to be present during the processing is detected, and if there is any one of the N load/store operations that results in the exception event to be present during the processing, none of the execution results of the N load/store operations is committed and the exception event is reported. With the technical solution of the present application, in the processing of a vector load/store operation, once an exception event occurs, the responding to the exception event can be guaranteed, and the vector load/store instruction does not produce any processing effect, so that the following situation does not occur due to the exception event: the processing result of only partial load/store operations of the vector load/store instruction is committed, and thus the atomicity retaining of vector instructions can be achieved.

### Embodiment 4

Referring to FIG. 4, a flowchart of steps of an atomicity retaining method according to Embodiment 4 of the present application is shown.

An executive entity of the atomicity retaining method provided by the embodiment of the present application may be a CPU, and the event that renders the vector load/store instruction non-atomic is a barrier instruction event. Based on this, the atomicity retaining method includes the steps as follows.

Step 401, generate N load/store operations from a vector load/store instruction, where N is a positive integer greater than or equal to 1.

In the embodiment of the present application, by the vector load/store instruction, the same processing can be implemented on a set of data at the same time. In practical applications, after the vector load/store instruction is received, splitting can be performed on the vector load/store instruction, to split the vector load/store instruction into N load/store operations, where N is a positive integer greater than or equal to 1.

In this example, the vector load/store instruction can be a Load instruction or a Store instruction.

After the N load/store operations are generated from the vector load/store instruction, step 402 is executed.

Step 402, detect whether there is a barrier instruction during processing of the N load/store operations.

After the N load/store operations are generated from the vector load/store instruction, whether there is a barrier instruction during the processing of the N load/store operations can be detected.

In the embodiment of the present application, the step of detecting whether there is a barrier instruction affecting atomicity during the processing of the N load/store operations can be executed in an issuing phase or execution phase of the N load/store operations.

Step 403, in response to obtaining the barrier instruction, when it is determined that execution of all the N load/store operations being executed has been completed, process the barrier instruction; or
step 404, in response to obtaining the vector load/store instruction, if there is a barrier instruction of which processing has not been completed, cache the N load/store operations generated from the vector load/store instruction without executing any thereof, until processing of the barrier instruction is over.

If it is detected that there is the barrier instruction during the processing of the N load/store operations, the following can be performed: in response to the obtained barrier instruction, when it is determined that the execution of all the N load/store operations being executed has been completed, and all the execution results of the N load/store operations have been committed, the barrier instruction is processed; or
in response to obtaining the vector load/store instruction, if there is a barrier instruction of which processing has not been completed, cache the N load/store operations generated from the vector load/store instruction and issue or execute none of the N load/store operations, and then execute the N load/store operations after the processing of the barrier instruction of which processing has not been completed is completed.

Step 403 and step 404 are parallel and alternative solutions after step 402 is executed, that is, after step 402 is executed, any one of step 403 and step 404 can be chosen for execution and step 403 and step 404 are not executed at the same time.

According to the atomicity retaining method provided by the embodiments of the present application, after it is detected that a barrier instruction is received, in response to obtaining the barrier instruction, when it is determined that the processing of all the N load/store operations being processed has been completed, the barrier instruction is processed, or in response to obtaining the vector load/store instruction, if there is a barrier instruction of which processing has not been completed, the N load/store operations generated from the vector load/store instruction are cached and not processed, and then the N load/store operations are processed after the processing of the barrier instruction of which processing has not been completed is completed. With the technical solution of the present application, the barrier instruction is first processed, and the N load/store operations are processed after the processing of the barrier instruction is completed; or the N load/store operations are processed first, the barrier instruction is processed after the execution of the N load/store operations is completed and all the execution results are committed, so that the following situation does not occur due to the barrier instruction: the processing results of only partial load/store operations of the vector load/store instruction are committed, and thus the atomicity retaining of vector instructions can be achieved.

### Embodiment 5

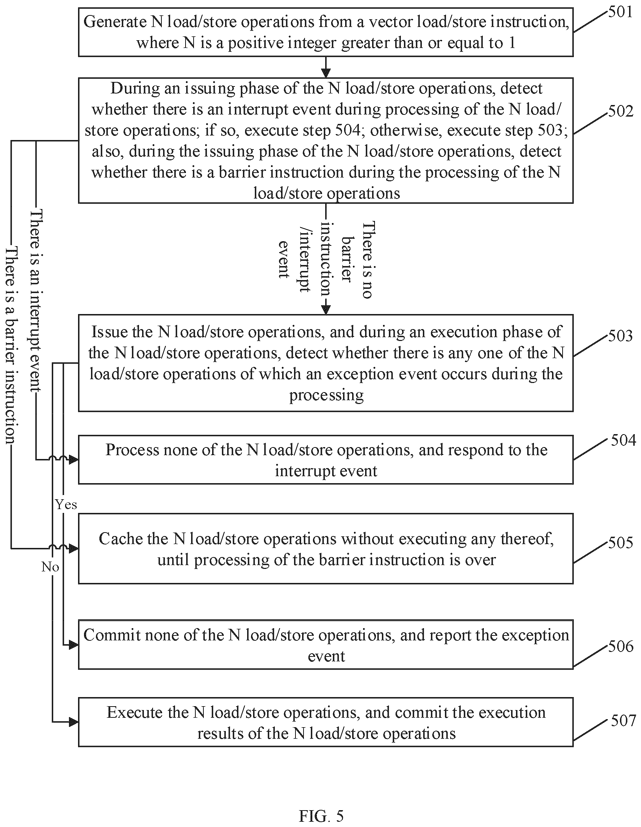

Referring to FIG. 5, a flowchart of steps of an atomicity retaining method according to Embodiment 5 of the present application is shown.

The embodiment of the present application provides another atomicity retaining method, which covers all the three types of events affecting the atomicity of a vector load/store instruction described in Embodiment 2 to Embodiment 4. Based on this, the atomicity retaining method includes the steps as follows.

Step 501, generate N load/store operations from a vector load/store instruction, where N is a positive integer greater than or equal to 1.

In the embodiment of the present application, the decoding manner and definition of the vector load/store instruction are consistent with those in Embodiment 2 to Embodiment 4, and will not be repeated herein.

Step 502, during an issuing phase of the N load/store operations, detect whether there is an interrupt event during processing of the N load/store operations; if so, execute step 504; otherwise, execute step 503; also, during the issuing phase of the N load/store operations, detect whether there is a barrier instruction during the processing of the N load/store operations; if so, execute step 505; otherwise, execute step 503.

Step 503, issue the N load/store operations, and during an execution phase of the N load/store operations, detect whether there is any one of the N load/store operations of which an exception event occurs during the processing; if so, execute step 506; otherwise, execute step 507.

Step 504, process none of the N load/store operations, and respond to the interrupt event.

In the embodiment of the present application, processing none of the N load/store operations includes issuing none of the N load/store operations, or executing none of the N load/store operations.

Further, after the responding to the interrupt event is completed, the N load/store operations are processed; that is, if it is the case that none of the N load/store operations is issued, step 503 is executed after the responding to the interrupt event is completed; if it is the case that none of the N load/store operations is executed, the part in step 503 that during the execution phase of the N load/store operations, detecting whether there is any one of the N load/store operations of which an exception event occurs during the processing is executed after the responding to the interrupt event is completed.

Step 505, cache the N load/store operations without executing any thereof, until processing of the barrier instruction is over.

In the embodiment of the present application, the N load/store operations are processed after the processing of the barrier instruction of which the processing has not been completed is completed, that is, step 503 is executed after the processing of the barrier instruction of which the processing has not been completed is completed.

Further, in step 502 and step 504, if there is an interrupt event/barrier instruction, step 503 can also be executed first, and after execution results of the N load/store operations are committed/the exception event is reported, the interrupt event/barrier instruction can be responded to.

Step 506, commit none of the N load/store operations, and report the exception event.

Step 507, execute the N load/store operations, and commit the execution results of the N load/store operations.

### Embodiment 6

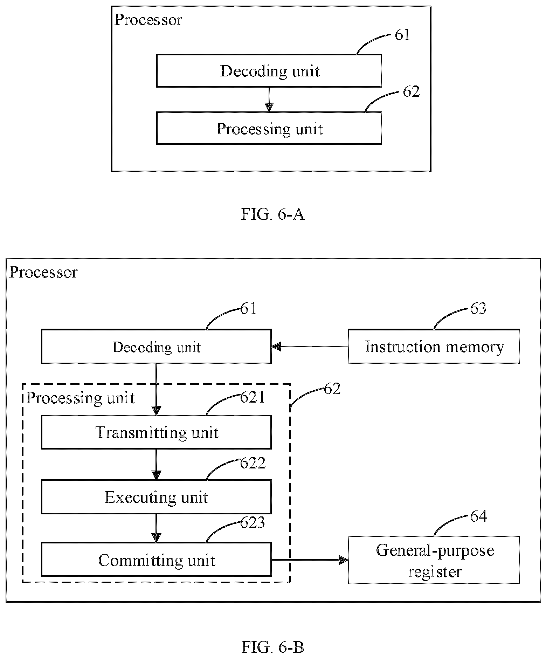

Referring to FIG. 6, a structural block diagram of a processor according to Embodiment 6 of the present application is shown.

As shown in Figure 6-A, the processor in the embodiment of the present application includes:
a decoding unit 61, configured to: obtain a vector load/store instruction, and generate N load/store operations from the vector load/store instruction, where N is a positive integer greater than or equal to 1;
a processing unit 62, configured to: detect whether there is an event during processing of the N load/store operations that renders the vector load/store instruction non-atomic; in a case that there is the event that renders the vector load/store instruction non-atomic, have none of the N load/store operations produce any processing effect, or have the N load/store operations all produce processing effects.

The processing unit 62 is specifically configured to: detect whether there is at least one of an interrupt event, an exception event, and a barrier instruction during the processing of the N load/store operations; in a case that there is at least one of the interrupt event, the exception event and the barrier instruction during the processing of the N load/store operations, determine that there is an event during the processing of the N load/store operations that renders the vector load/store instruction non-atomic.

As shown in Figure 6-B, the processor includes an instruction memory 63, and the vector load/store instruction of the coding unit can come from the instruction memory.

Optionally, the processing unit 62 includes: an issuing unit 621, an executing unit 622 and a committing unit 623.

The issuing unit 621 is configured to: before the detecting whether there is an event during the processing of the N load/store operations that renders the vector load/store instruction non-atomic, add an interrupt identifier to one or more of the N load/store operations, in response to the occurrence of the interrupt event, during processing of the vector load/store instruction, where the interrupt identifier is used to indicate the occurrence of the interrupt event during the processing of the vector load/store instruction.

Optionally, the issuing unit 621 is specifically configured to add the interrupt identifier to any one of the N load/store operations.

Optionally, the issuing unit 621 is specifically configured to add the interrupt identifier to all the N load/store operations.

Optionally, the issuing unit 621 is configured to: examine the N load/store operations in turn to detect whether the N load/store operations are marked with interrupt identifiers; if any one of the N load/store operations is marked with the interrupt identifier, issue none of the N load/store operations.

Optionally, the issuing unit 621 is configured to: examine the N load/store operations in turn to detect whether the N load/store operations are marked with interrupt identifiers; if it is determined that any one of the N load/store operations is marked with the interrupt identifier, issue the N load/store operations;
the executing unit 622 is configured to: cache the N load/store operations generated from the vector load/store instruction without executing any thereof, until the interrupt event is handled.

Optionally, the issuing unit 621 is configured to: examine the N load/store operations in turn to detect whether the N load/store operations are marked with interrupt identifiers; if it is determined that any one of the N load/store operations is marked with the interrupt identifier, issue the N load/store operations;
the executing unit 622 is configured to execute all the N load/store operations;
the committing unit 623 is configured to commit execution results of the N load/store operations;
when the processor determines that the execution results of the N load/store operations is committed, the processor handles the interrupt event.

Optionally, the issuing unit 621 is configured to: detect whether a foremost load/store operation of the N load/store operations is marked with the interrupt identifier, and if the foremost load/store operation is marked with the interrupt identifier, issue none of the N load/store operations.

Optionally, the issuing unit 621 is configured to: detect whether a foremost load/store operation of the N load/store operations is marked with the interrupt identifier; and if it is determined that the foremost load/store operation is marked with the interrupt identifier, issue the N load/store operations;
the executing unit 622 is configured to: cache the N load/store operations generated from the vector load/store instruction without executing any thereof, until the interrupt event is handled.

Optionally, the issuing unit 621 is configured to: detect whether a foremost load/store operation of the N load/store operations is marked with the interrupt identifier; and if it is determined that the foremost load/store operation is marked with the interrupt identifier, issue the N load/store operations;
the executing unit 622 is configured to execute all the N load/store operations.
the committing unit 623 is configured to commit execution results of the N load/store operations.

Optionally, the issuing unit 621 is configured to: if none of the N load/store operations is marked with the interrupt identifier, issue the N load/store operations;
the executing unit 622 is configured to: execute the N load/store operations;
the committing unit 623 is configured to commit execution results of the N load/store operations.

Optionally, the issuing unit 621 is configured to: detect whether there is any one of the N load/store operations that results in the exception event to be present during the processing, to obtain a detecting result, and issue the N load/store operations;
the executing unit 622 is configured to: execute the N load/store operations;
the committing unit 623 is configured to: if the detecting result indicates that there exists a load/store operation of the N load/store operations to render the occurrence of the exception event to be present during the processing, commit none of the execution results of the N load/store operations and report the exception event.

Optionally, the issuing unit 621 is configured to issue the N load/store operations;
the executing unit 622 is configured to: execute the N load/store operations, and detect whether there is any one of the N load/store operations that results in the exception event to be present during the processing, to obtain a detecting result;
the committing unit 623 is configured to: if the detecting result indicates that there exists a load/store operation of the N load/store operations to render the occurrence of the exception event to be present during the processing, commit none of the execution results of the N load/store operations and report the exception event.

Optionally, the issuing unit 621 is configured to: obtain a load/store address of each of the N load/store operations; and for each load/store address, detect whether there is a condition satisfying a trigger of the exception event; if there is the condition satisfying the trigger of the exception event, determine the detecting result to be that there is any one of the N load/store operations that results in the exception event to be present during the processing; if there is no condition satisfying the trigger of the exception event, determine the detecting result to be that there is none of the N load/store operations that results in the exception event to be present during the processing;
where the condition satisfying the trigger of the exception event includes at least one of the following conditions:
there is an attribute permission illegality in a permission for any one of the load/store operations;
a load/store address is not in an address translation table;
a load/store address of the vector load/store instruction is out-of-bounds.

Optionally, the committing unit 621 is configured to: if the detecting result indicates that none of the N load/store operations renders the occurrence of the exception event to be present during the processing, commit execution results of the N load/store operations.

Optionally, the processing unit 62 is configured to: when it is determined that the barrier instruction is received, in response to the barrier instruction, process the barrier instruction when it is determined that all the N load/store operations being processed have been executed and execution results of the N load/store operations have been committed; or
in response to obtaining the vector load/store instruction, if there is a barrier instruction of which processing has not been completed, cache the N load/store operations generated from the vector load/store instruction without executing any thereof, until processing of the barrier instruction is over.

Optionally, the vector load/store instruction is a Load instruction or a Store instruction; the processing unit further includes an executing unit; and the processor further includes a general-purpose register 64;
when the vector load/store instruction is the Load instruction, the executing unit 622 is specifically configured to: execute reading operand at an address indicated by the vector load/store instruction from a memory; the committing unit 623 is configured to read the operand to the designated general-purpose register 64;
when the vector load/store instruction is a Store instruction, the executing unit 622 is specifically configured to: execute fetching the operand at the address indicated by the vector load/store instruction from the designated general-purpose register; the committing unit is configured to write the operand to the memory.

The processor in the embodiment of the present application is configured to implement the corresponding atomicity retaining method in the foregoing method embodiments, and has the beneficial effects of corresponding method implementations, which will not be repeated here.

### Embodiment 7

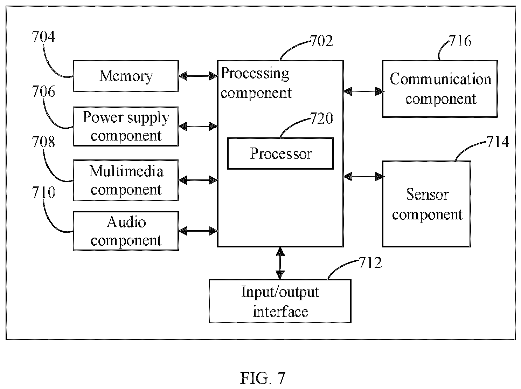

Referring to FIG. 7, a schematic structural diagram of an electronic device for atomicity retaining according to Embodiment 7 of the present application is shown.

As shown in FIG. 7, the electronic device can include one or more of the following components: a processing component 702, a memory 704, a power supply component 706, a multimedia component 708, an audio component 710, an input/output (I/O) interface 712, a sensor component 714, and a communication component 716.

The processing component 702 generally controls the overall operation of the electronic device, such as operations associated with display, data communications, camera operations, and recording operations. The processing element 702 can include one or more processors 720 to process instructions to complete all or part of the steps of the methods mentioned above. Additionally, the processing component 702 can include one or more modules to facilitate interaction between the processing component 702 and other components. For example, the processing component 702 can include a multimedia module to facilitate interaction between the multimedia component 708 and the processing component 702.

The memory 704 is configured to store various types of data to support operations in the electronic device. Examples of such data include instructions, contact data, phonebook data, messages, pictures, videos, and so on for any application program or method for operating on the electronic device. The memory 704 can be implemented by any type of volatile or nonvolatile storage device, or a combination thereof, such as a static random access memory (SRAM), electrically erasable programmable read-only memory (EEPROM), erasable programmable read-only memory (EPROM), programmable read-only memory (PROM), read-only memory (ROM), magnetic storage, flash memory, magnetic or optical disk.

The power supply component 706 provides power to various components of the electronic device. The power supply component 706 can include a power management system, one or more power supplies, and other components associated with generating, managing, and distributing power for the terminal 700.

The multimedia component 708 includes a screen that provides an output interface between the electronic device and a user. In some embodiments, the screen can include a liquid crystal display (LCD) and a touch panel (TP). If the screen includes a touch panel, the screen can be implemented as a touch screen to receive input signals from the user. The touch panel includes one or more touch sensors to sense touches, slides, and gestures acting on the touch panel. The touch sensor can not only sense the boundary of a touch or slide action but also detect the duration and pressure associated with the touch or slide action. In some embodiments, the multimedia component 708 includes a front-facing camera and/or a rear-facing camera. When the electronic device is in an operating mode, such as a shooting mode or a video mode, the front-facing camera and/or the rear-facing camera can receive external multimedia data. Each front-facing camera and rear-facing camera can be a fixed optical lens system or have a focal length and an optical zoom capability.

The audio component 710 is configured to output and/or input audio signals. For example, the audio component 710 includes a microphone (MIC) configured to receive external audio signals when the terminal is in an operating mode such as a call mode, a recording mode, and a voice recognition mode. The received audio signal can be further stored in the memory 704 or sent via the communication component 717. In some embodiments, the audio component 710 further includes a speaker for outputting audio signals.

The I/O interface 712 provides an interface between the processing component 702 and a peripheral interface module. The peripheral interface module may be a keyboard, a click wheel, a button, and the like. These buttons may include, but are not limited to: a home button, volume button, start button, and lock button.

The sensor component 714 includes one or more sensors for providing various aspects of status assessment for the electronic device 700. For example, the sensor component 714 can detect an open/closed state of the electronic device 700, a relative positioning of components such as a display and keypad of a terminal, a position change of the terminal or a component of the terminal, the presence or absence of contact by a user with the electronic device, the orientation or acceleration/deceleration of the electronic device, and the temperature changes of the electronic device. The sensor component 714 can include a proximity sensor configured to detect the presence of nearby objects without any physical contact. The sensor component 714 can also include a light sensor, such as a CMOS or CCD image sensor, for use in imaging applications. In some embodiments, the sensor component 714 can also include an acceleration sensor, a gyroscope sensor, a magnetic sensor, a pressure sensor, or a temperature sensor.

The communication component 716 is configured to facilitate wired or wireless communications between the electronic device and other devices. The electronic device can access wireless networks, such as WiFi, 2G or 3G, or a combination thereof, based on communication standards. In an example embodiment, the communication component 716 receives broadcast signals or broadcast related information from an external broadcast management system via a broadcast channel. In an example embodiment, the communication component 716 also includes a near field communication (NFC) module to facilitate short-range communications. For example, the NFC module can be implemented based on radio frequency identification (RFID) technologies, infrared data association (IrDA) technologies, ultra wide band (UWB) technologies, bluetooth (BT) technologies and other technologies.

In an example embodiment, the electronic device can be implemented by one or more application specific integrated circuits (ASICs), digital signal processors (DSPs), digital signal processing devices (DSPDs), programmable logic devices (PLDs), field programmable Gate arrays (FPGAs), controllers, microcontrollers, microprocessors or other electronic components to process the atomicity retaining method described in the Embodiments 1 to 5.

The electronic device in the embodiments of the present application is configured to implement the corresponding atomicity retaining method in the plurality of method embodiments mentioned above, and has the beneficial effects of the corresponding method implementations, which will not be repeated here.

The various embodiments in this specification are all described in a progressive manner, each embodiment focuses on its differences from other embodiments, and for the identifical or similar parts between the various embodiments, a reference can be made to each other. As for the device embodiments, since they are basically similar to the method embodiments, the description of which is relatively simple, and for the relevant details, a reference can be made to the partial description of the method embodiments.

The atomicity retaining method and the processor, and the electronic device provided by the present application have been introduced in detail above. Specific examples are used herein to illustrate the principles and implementations of the present application. The description of the embodiments is only for facilitating the understanding of the methods and core ideas of the present application. Also, for those of ordinary skill in the art, there will be changes in the specific implementations and application scope based on the ideas of the present application. In summary, the content of this specification should not be understood as a limitation on the present application.

The algorithms and displays provided herein are not inherently associated with any particular computer, electronic system, or other devices. Various general-purpose systems can also be used with teaching based on this. From the above description, the structure required to construct such a system is obvious. Furthermore, the present application is not specific to any specific programming language. It should be understood that the content of the present application described herein may be implemented using a variety of programming languages, and the above description for specific languages is for the purpose of disclosing the best implementations for the present application.

In the specification provided herein, a number of specific details are described. However, it is understood that the embodiments of the present application can be practiced without these specific details. In some instances, well-known methods, structures, and techniques have not been shown in detail so as not to obscure the understanding of this specification.

Similarly, it should be understood that in the above description of example embodiments of the present application, in order to simplify the present disclosure and facilitate the understanding of one or more of the various inventive aspects, various features of the present application are sometimes grouped together into a single embodiment, drawing, or the description thereof. However, the method of the present disclosure should not be interpreted as reflecting an intention that the claimed present application claims more features than those expressly recited in each claim. More precisely, as the following claims reflect, inventive aspects lie in less than all features of a single foregoing disclosed embodiment. Thus, the claims abiding by the detailed description of embodiments are hereby expressly incorporated into this detailed description of embodiments, with each claim itself serving as a separate embodiment of the present application.

Those skilled in the art can understand that modules in a device in an embodiment can be adaptively changed and provided in one or more devices different from that in the embodiment. The modules, units or components in the embodiments can be combined into a module, unit or component, and furthermore they can be divided into a plurality of sub-modules, sub-units or sub-components. Except for at least some of such features and/or processes or units that are mutually exclusive, any combination may be used to combine all features disclosed in this specification (including accompanying claims, abstract, and drawings), as well as all processes or units of any method or device disclosed in this way. Each feature disclosed in this specification (including accompanying claims, abstract, and drawings) may be replaced by alternative features serving the same, equivalent, or similar purpose unless expressly stated otherwise.

Furthermore, those skilled in the art can understand that although some embodiments described herein include certain features included in other embodiments rather than other features, the combinations of features of different embodiments are meant to be within the scope of the present application and form different embodiments. For example, in the following claims, any of the claimed embodiments can be used in any combination.

Various component embodiments of the present application can be implemented in hardware, or in one or more software modules running on a processor, or in a combination thereof. Those skilled in the art should understand that a microprocessor or a digital signal processor (DSP) can be used in practice to implement some or all functions of some or all components in the browser client device according to the embodiments of the present application. The present application can also be implemented as a device or device program (e.g., computer program and computer program product) for performing part or all of the methods described herein. Such a program for implementing the present application can be stored on a computer-readable medium, or can be in the form of one or more signals. Such signals can be downloaded from an Internet website, or provided on a carrier signal or in any other form.

It should be noted that the embodiments illustrate rather than limit the application, and those skilled in the art will be able to design alternative embodiments without departing from the scope of the appended claims. In the claims, any reference signs placed between a bracket shall not be construed as limiting the claim. The word "comprising" does not exclude the presence of elements or steps not listed in a claim. The word "a" or "an" preceding an element does not exclude the presence of a plurality of such elements. The present application can be implemented by means of hardware including several different elements and by means of a suitably programmed computer. In the unit claim reciting several means, several of these means can be embodied by the same item of hardware. The use of the words first, second, third, etc. does not indicate any order. These words can be interpreted as names.

## Claims

1. An atomicity retaining method, comprising:
generating N load/store operations from a vector load/store instruction, wherein N is a positive integer greater than or equal to 1;
detecting whether there is an event during processing of the N load/store operations that renders the vector load/store instruction non-atomic; and
in a case that there is the event that renders the vector load/store instruction non-atomic, having none of the N load/store operations produce any processing effect, or having the N load/store operations all produce processing effects.

2. The method according to claim 1, wherein detecting whether there is the event during the processing of the N load/store operations that renders the vector load/store instruction non-atomic comprises:
detecting whether there is at least one of an interrupt event, an exception event, and a barrier instruction during the processing of the N load/store operations; and
in a case that there is at least one of the interrupt event, the exception event and the barrier instruction during the processing of the N load/store operations, determining that there is the event during the processing of the N load/store operations that renders the vector load/store instruction non-atomic.

3. The method according to claim 2, wherein before detecting whether there is the event during the processing of the N load/store operations that renders the vector load/store instruction non-atomic, the method further comprises:
adding an interrupt identifier to one or more of the N load/store operations, in response to an occurrence of an interrupt event, during processing of the vector load/store instruction;
wherein the interrupt identifier is used to indicate the occurrence of the interrupt event during the processing of the vector load/store instruction.

4. The method according to claim 3, wherein adding the interrupt identifier to one or more of the N load/store operations comprises:
adding the interrupt identifier to any one of the N load/store operations.

5. The method according to claim 3, wherein adding the interrupt identifier to one or more of the N load/store operations comprises:
adding the interrupt identifier to all the N load/store operations.

6. The method according to any one of claims 3 to 5, wherein detecting whether there is the event during the processing of the N load/store operations that renders the vector load/store instruction non-atomic comprises:
examining the N load/store operations in turn to detect whether the N load/store operations are marked with interrupt identifiers;
wherein in the case that there is the event that renders the vector load/store instruction non-atomic, having none of the N load/store operations produce any processing effect comprises:
if any one of the N load/store operations is marked with an interrupt identifier, caching the N load/store operations generated from the vector load/store instruction without executing any thereof, until the interrupt event is handled.

7. The method according to any one of claims 3 to 5, wherein detecting whether there is the event during the processing of the N load/store operations that renders the vector load/store instruction non-atomic comprises:
examining the N load/store operations in turn to detect whether the N load/store operations are marked with interrupt identifiers;
wherein in the case that there is the event that renders the vector load/store instruction non-atomic, having the N load/store operations all produce processing effects comprises:
if any one of the N load/store operations is marked with an interrupt identifier, executing all the N load/store operations;
committing execution results of the N load/store operations; and
when it is determined that all the execution results of the N load/store operations have been committed, handling the interrupt event.

8. The method according to any one of claims 3 to 5, wherein detecting whether there is the event during the processing of the N load/store operations that renders the vector load/store instruction non-atomic comprises:
detecting whether a foremost load/store operation of the N load/store operations is marked with an interrupt identifier;
wherein in the case that there is the event that renders the vector load/store instruction non-atomic, having none of the N load/store operations produce any processing effect comprises:
if the foremost load/store operation is marked with the interrupt identifier, caching the N load/store operations generated from the vector load/store instruction without executing any thereof, until the interrupt event is handled.

9. The method according to any one of claims 3 to 5, wherein detecting whether there is the event during the processing of the N load/store operations that renders the vector load/store instruction non-atomic comprises:
detecting whether a foremost load/store operation of the N load/store operations is marked with an interrupt identifier;
wherein in the case that there is the event that renders the vector load/store instruction non-atomic, having the N load/store operations all produce processing effects comprises:
if the foremost load/store operation is marked with the interrupt identifier, executing all the N load/store operations;
committing execution results of the N load/store operations; and
when it is determined that all the execution results of the N load/store operations have been committed, handling the interrupt event.

10. The method according to any one of claims 3 to 5, further comprising:
if none of the N load/store operations is marked with an interrupt identifier, executing the N load/store operations; and
committing execution results of the N load/store operations.

11. The method according to any one of claims 2 to 10, wherein detecting whether there is the event during the processing of the N load/store operations that renders the vector load/store instruction non-atomic comprises:
detecting whether there exists a load/store operation of the N load/store operations to render an occurrence of an exception event during the processing, to obtain a detecting result; and
executing the N load/store operations;
wherein in that case that there is the event that renders the vector load/store instruction non-atomic, having none of the N load/store operations produce any processing effect comprises:
if the detecting result indicates that there exists a load/store operation of the N load/store operations to render the occurrence of the exception event during the processing, committing none of execution results of the N load/store operations and reporting the exception event.

12. The method according to claim 11, wherein detecting whether there exists the load/store operation of the N load/store operations to render the occurrence of the exception event during the processing, to obtain the detecting result comprises:
obtaining a load/store address of each of the N load/store operations;
detecting whether there is a condition satisfying a trigger of the exception event for each load/store address; if there is the condition satisfying the trigger of the exception event, determining the detecting result to be that there exists a load/store operation of the N load/store operations to render the occurrence of the exception event during the processing; if there is no condition satisfying the trigger of the exception event, determining the detecting result to be that there exists none of the N load/store operations to render the occurrence of the exception event during the processing;
wherein the condition satisfying the trigger of the exception event comprises at least one of the following conditions:
there is an attribute permission illegality in a permission for any one of the load/store operations;
a load/store address is not in an address translation table; and
a load/store address of the vector load/store instruction is out-of-bounds.

13. The method according to claim 11 or 12, further comprising, after executing the N load/store operations:
if the detecting result indicates that none of the N load/store operations renders the occurrence of the exception event during the processing, committing execution results of the N load/store operations.

14. The method according to any one of claims 2 to 10, wherein detecting whether there is the event during the processing of the N load/store operations that renders the vector load/store instruction non-atomic comprises:
detecting whether a barrier instruction is received;
wherein in the case that there is the event that renders the vector load/store instruction non-atomic, having none of the N load/store operations produce any processing effect, or having the N load/store operations all produce processing effects comprises:
in response to obtaining the barrier instruction, processing the barrier instruction when it is determined that all the N load/store operations being processed have been executed and execution results of the N load/store operations have been committed; or
in response to obtaining the vector load/store instruction, if there is a barrier instruction of which processing has not been completed, caching the N load/store operations generated from the vector load/store instruction without executing any thereof, until processing of the barrier instruction is over.

15. The method according to any one of claims 1 to 14, wherein the vector load/store instruction is a Load instruction or a Store instruction;
when the vector load/store instruction is the Load instruction, executing the N load/store operations comprises:
executing an operation of reading operand at an address indicated by the vector load/store instruction from a memory to a designated general-purpose register;
when the vector load/store instruction is the Store instruction, executing the N load/store operations comprises:
executing an operation of writing the operand at the address indicated by the vector load/store instruction from the designated general-purpose register to the memory.

16. A processor, comprising:
a decoding unit, configured to obtain a vector load/store instruction, and generate N load/store operations from the vector load/store instruction, wherein N is a positive integer greater than or equal to 1; and
a processing unit, configured to detect whether there is an event during processing of the N load/store operations that renders the vector load/store instruction non-atomic; and in a case that there is the event that renders the vector load/store instruction non-atomic, have none of the N load/store operations produce any processing effect, or have the N load/store operations all produce processing effects.

17. The processor according to claim 16, wherein the processing unit is specifically configured to:
detect whether there is at least one of an interrupt event, an exception event, and a barrier instruction during the processing of the N load/store operations; and in a case that there is at least one of the interrupt event, the exception event and the barrier instruction during the processing of the N load/store operations, determine that there is the event during the processing of the N load/store operations that renders the vector load/store instruction non-atomic.

18. The processor according to claim 17, wherein the processing unit comprises an issuing unit;
the issuing unit is configured to: before the detecting whether there is the event during the processing of the N load/store operations that renders the vector load/store instruction non-atomic, add an interrupt identifier to one or more of the N load/store operations, in response to an occurrence of an interrupt event, during processing of the vector load/store instruction; wherein the interrupt identifier is used to indicate the occurrence of the interrupt event during the processing of the vector load/store instruction.

19. The processor according to claim 18, wherein
the issuing unit is specifically configured to add the interrupt identifier to any one of the N load/store operations.

20. The processor according to claim 18, wherein
the issuing unit is specifically configured to add the interrupt identifier to all the N load/store operations.

21. The processor according to any one of claims 18 to 20, wherein, the issuing unit is configured to: examine the N load/store operations in turn to detect whether the N load/store operations are marked with interrupt identifiers; if any one of the N load/store operations is marked with an interrupt identifier, issue none of the N load/store operations.

22. The processor according to any one of claims 18 to 20, wherein the processing unit further comprises an executing unit;
the issuing unit is configured to: examine the N load/store operations in turn to detect whether the N load/store operations are marked with interrupt identifiers; if it is determined that any one of the N load/store operations is marked with an interrupt identifier, issue the N load/store operations;
the executing unit is configured to: cache the N load/store operations generated from the vector load/store instruction without executing any thereof, until the interrupt event is handled.

23. The processor according to any one of claims 18 to 20, wherein the processing unit further comprises an executing unit and a committing unit;
the issuing unit is configured to: examine the N load/store operations in turn to detect whether the N load/store operations are marked with interrupt identifiers; if it is determined that any of the N load/store operations is marked with an interrupt identifier, issue the N load/store operations;
the executing unit is configured to execute all the N load/store operations;
the committing unit is configured to commit execution results of the N load/store operations.

24. The processor according to any one of claims 18 to 20, wherein
the issuing unit is configured to: detect whether a foremost load/store operation of the N load/store operations is marked with the interrupt identifier, and if the foremost load/store operation is marked with the interrupt identifier, issue none of the N load/store operations.

25. The processor according to any one of claims 18 to 20, wherein the processing unit further comprises an executing unit;
the issuing unit is configured to: detect whether a foremost foremost load/store operation of the N load/store operations is marked with an interrupt identifier; and if it is determined that the foremost foremost load/store operation is marked with the interrupt identifier, issue the N load/store operations;
the executing unit is configured to: cache the N load/store operations generated from the vector load/store instruction without executing any thereof, until the interrupt event is handled.

26. The processor according to any one of claims 18 to 20, wherein the processing unit further comprises an executing unit and a committing unit;
the issuing unit is configured to: detect whether a foremost load/store operation of the N load/store operations is marked with an interrupt identifier; and if it is determined that the foremost foremost load/store operation is marked with the interrupt identifier, issue the N load/store operations;
the executing unit is configured to execute all the N load/store operations;
the committing unit is configured to commit execution results of the N load/store operations.

27. The processor according to any one of claims 18 to 20, wherein the processing unit further comprises an executing unit and a committing unit;
the issuing unit is configured to: if none of the N load/store operations is marked with an interrupt identifier, issue the N load/store operations;
the executing unit is configured to execute the N load/store operations;
the committing unit is configured to commit execution results of the N load/store operations.

28. The processor according to claim 17, wherein the processing unit comprises an issuing unit, an executing unit, and a committing unit;
the issuing unit is configured to: issue the N load/store operations;
the executing unit is configured to: execute the N load/store operations, and detect whether there exists a load/store operation of the N load/store operations to render an occurrence of an exception event during the processing, to obtain a detecting result;
the committing unit is configured to: if the detecting result indicates that there exists a load/store operation of the N load/store operations to render the occurrence of the exception event during the processing, commit none of execution results of the N load/store operations and report the exception event.

29. The processor according to claim 27 or 28, wherein
the executing unit is configured to: obtain a load/store address of each of the N load/store operations; and detect whether there is a condition satisfying a trigger of the exception event for each load/store address; if there is the condition satisfying the trigger of the exception event, determine the detecting result to be that there exists a load/store operation the N load/store operations to render the occurrence of the exception event during the processing; if there is no condition satisfying the trigger of the exception event, determine the detecting result to be that there exists none of the N load/store operations to render the occurrence of the exception event during the processing;
wherein the condition satisfying the trigger of the exception event comprises at least one of the following conditions:
there is an attribute permission illegality in a permission for any one of the load/store operations;
a load/store address is not in an address translation table; and
a load/store address of the vector load/store instruction is out-of-bounds.

30. The processor according to claim 29, wherein
the committing unit is configured to: if the detecting result indicates that none of the N load/store operations renders the occurrence of the exception event during the processing, commit execution results of the N load/store operations.

31. The processor according to claim 16, wherein the processing unit is configured to:
when it is determined that a barrier instruction is received, in response to the barrier instruction, process the barrier instruction when it is determined that all the N load/store operations being processed have been executed and execution results of the N load/store operations have been committed; or
in response to obtaining the vector load/store instruction, if there is a barrier instruction of which processing has not been completed, cache the N load/store operations generated from the vector load/store instruction without executing any thereof, until processing of the barrier instruction is over.

32. An electronic device, comprising a memory and one or more programs, wherein the one or more programs are stored in the memory and configured to cause one or more processors to execute the atomicity retaining method according to any one of claims 1 to 15.
